# EUROPÄISCHE PATENTSCHRIFT

(11) **EP 2 841 882 B1**
(45) Veröffentlichungstag und Bekanntmachung des Hinweises auf die Patenterteilung: **26.02.2020**
(21) Anmeldenummer: 13713884.8
(22) Anmeldetag: 02.04.2013
(51) Int. Cl.: G01D 18/00

(54) **SENSORZEIT-SYNCHRONISATION**
SENSOR TIME SYNCHRONIZATION
SYNCHRONISATION DE TEMPS DE CAPTEUR

(30) Priorität: 27.04.2012 DE 102012207138
(43) Veröffentlichungstag der Anmeldung: 04.03.2015
(73) Patentinhaber: Robert Bosch GmbH, 70442 Stuttgart (DE)
(72) Erfinder: BICHLER, Rudolf, 72764 Reutlingen (DE); LAMMEL, Gerhard, 72070 Tuebingen (DE); RETZ, Guido, 72147 Nehren (DE); Dorsch, Rainer, 72135 Dettenhausen (DE)
(86) Internationale Anmeldenummer: PCT/EP2013/056954
(87) Internationale Veröffentlichungsnummer: WO 2013/160073

(56) Entgegenhaltungen:
- EP-A1- 1 548 417
- EP-A2- 1 493 997
- US-A- 5 918 194
- US-A1- 2011 164 163
- US-B1- 6 487 787
- US-B1- 7 382 780
- US-B1- 8 050 881

## Beschreibung

### Stand der Technik

Synchronisierung von Sensordaten mit der Anzeige auf mobilen Geräten wird z.B. in der Offenlegungsschrift US 20110164163 A1 beschrieben. Dort geht es um die Synchronisierung von Sensoren und Augmented Reality im Allgemeinen, nicht um die Methode einzelne Datenpunkte und deren zeitlichen Versatz untereinander zu korrigieren.

US 8050881 B1 beschreibt die Synchronisierung einer lokalen Uhr im Sensor mit eine weiteren Uhr und Interpolation der Zeiten. Dabei werden jedoch nur die Zeitpunkte von (ganzzahligen) Messungen berücksichtigt, nicht die Verzögerung zwischen Entstehung der Daten und Auslesung aus dem Sensor. Auch wird die Asynchronität verschiedener Sensoren untereinander nicht berücksichtigt oder aktiv beseitigt.

US 7382780 B1 beschreibt eine nachträgliche Zeitsynchronisierung mit Hilfe von sample counters und real time clock, sowie das Zusammenfassen zu Data frames.

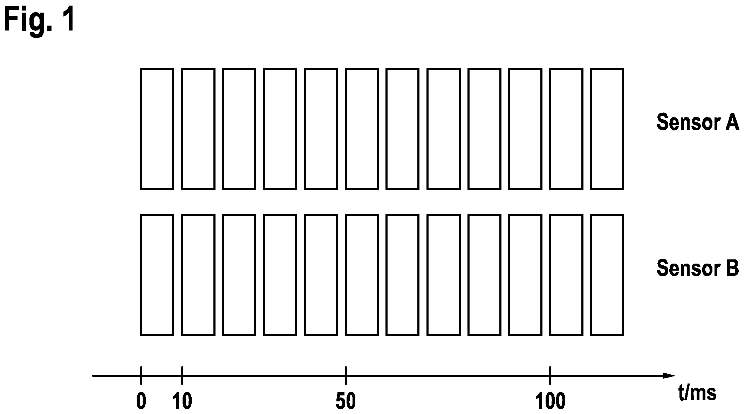

Sensordatenfusion erfordert mehrere Sensoren in einem System, aus denen eine neue Zielgröße berechnet wird. Beispielsweise kann aus einer Ausgangslage eines starren Körpers durch eine Wertereihe von einem Beschleunigungssensor und einem Drehratensensor die Lage zu einem späteren Zeitpunkt näherungsweise berechnet werden. Häufig ist das System sogar überbestimmt, z.B. bei einer Fusion der Daten von Beschleunigungssensor, Drehratensensor und Erdmagnetfeldsensor, so dass durch geeignete Filter, z.B. Kalman Filter, Fehler minimiert werden können. Die in der Praxis verwendeten Algorithmen zur Berechnung der Zielgrößen gehen davon aus, dass die Messpunkte der einzelnen Sensoren äquidistant sind und keine Phasenverschiebung aufweisen. Die Datenraten sind typischerweise identisch oder Vielfache voneinander, z.B. bei einem Beschleunigungssensor und einem Drehratensensor, die beide mit 100 Hz Sensordaten liefern, ergibt sich das Bild in Fig. 1.

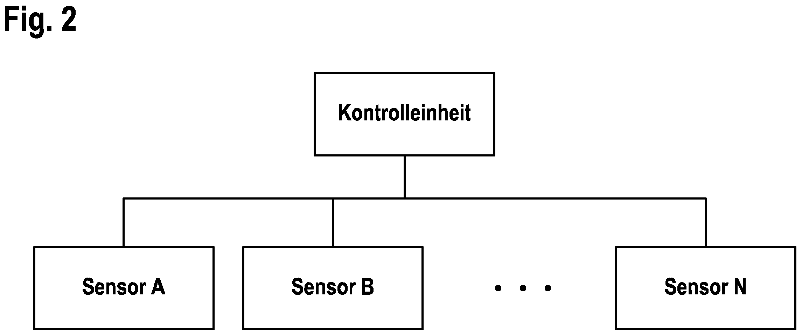

Die Sensordatenfusion findet typischerweise auf Systemen statt, die aus einer Kontrolleinheit und mehreren Sensoren bestehen. Fig. 2 zeigt einen möglichen Aufbau eines solchen Systems. Eine Anzahl Sensoren A bis N ist mit einer gemeinsamen Kontrolleinheit verbunden.

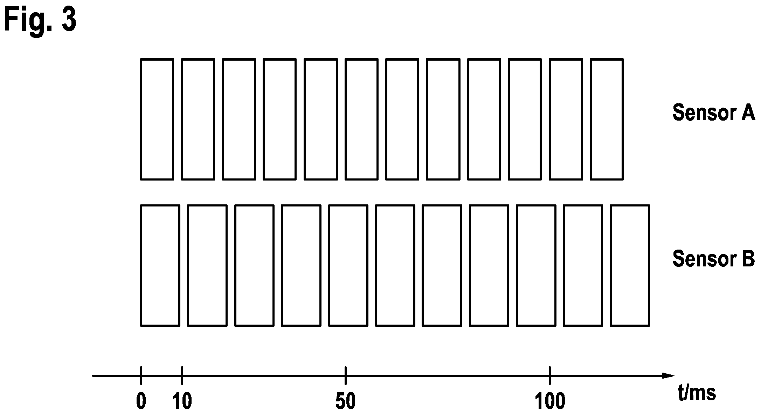

Die Kontrolleinheit kann in Software auf einem Prozessor oder Mikrocontroller implementiert werden oder in dedizierter Hardware. Die Sensoren bestehen typsicherweise aus einem MEMS Element, einem analogen Frontend und einem digitalen Backend. Der Sensor liefert typischerweise mit einer konfigurierbaren Frequenz neue Daten und legt diese im digitalen Backend ab. Häufig enthält das digitale Backend einen FIFO Speicher, in dem die Daten zwischengespeichert werden, wie z.B. im dreiachsigen Beschleunigungssensor BMA255 Digital der Firma Bosch Sensortec, damit die Kontrolleinheit seltener Daten abholen muss, was zu einer Energieeinsparung führen kann. Die Sensoren sind typischerweise nicht synchronisiert und die Ausgabedatenrate der Sensoren ist von Umgebungsparametern wie der Temperatur abhängig. Die Sensoren liefern asynchrone Daten wie in Fig. 3 schematisch dargestellt.

In der Regel werden heute die asynchronen Sensordaten aus den Sensoren ausgelesen, und die Kontrolleinheit legt einen Zeitstempel auf den Auslesezeitpunkt, womit sie künstlich synchronisiert werden. Das führt zu Fehlern in der oder den berechneten Zielgrößen bei der Sensordatenfusion.

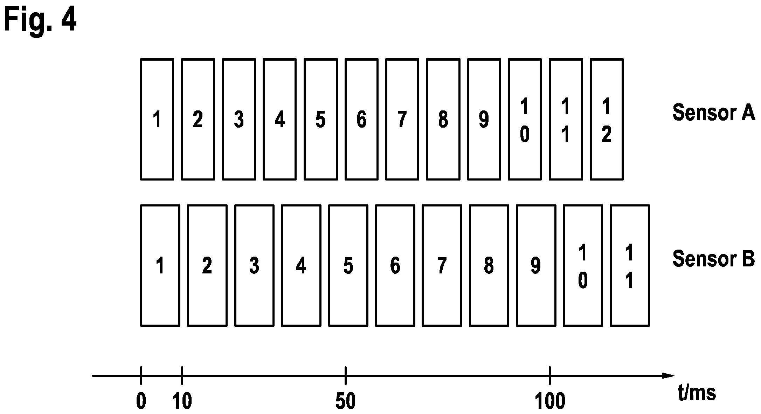

Werden die Daten im digitalen Backend der jeweiligen Sensoren in einem FIFO gespeichert, dann ist die Synchronisation noch schwieriger, da der Auslesezeitpunkt für alle Sensordaten im FIFO der gleiche ist. Wird mit der im Sensor eingestellten Datenrate zurückgerechnet, können die Zeitstempel auf den Daten sogar stark auseinanderlaufen. Fig. 4 zeigt dazu beispielsweise einen Fall, in dem das 11. Element im FIFO von Sensor B nach dem 12. Element im FIFO von Sensor A aufgenommen wird.

Es gibt heute verschiedene Möglichkeiten verschiedene Sensoren vollständig zu synchronisieren.
Eine erste Möglichkeit ist der sogenannte Forced Mode. Die Sensoren starten dabei eine Messung, wenn sie über die digitale Schnittstelle beispielsweise von der Kontrolleinheit angestoßen werden, wie z.B. im elektronischen Kompass BMC050 der Firma Bosch Sensortec. Dies erfolgt typischerweise durch Lesen oder Schreiben auf ein Register des digitalen Backends.
Eine zweite Möglichkeit liegt in der Verwendung eines externen Synchronisationsanschlusses: Die Sensoren haben dabei zusätzlich zur digitalen Schnittstelle einen externen Pin, an den ein Synchronisationssignal von der Kontrolleinheit, einem anderen Sensor oder einer anderen Komponente im System anliegt.

Werden FIFOs verwendet, lässt sich eine partielle Synchronisation dadurch erreichen, dass ein gemeinsamer FIFO für alle Sensoren verwendet wird. Die partielle Synchronisation vermeidet das in Fig. 4 dargestellte FIFO spezifische Synchronisationsproblem (Überholen von Daten). Diese Lösung wird häufig in Systemen eingesetzt, die einen Mikrokontroller als Sensorhub verwenden, wie z.B. den ML610Q792 der Firma Lapis. Zudem gibt es Sensoren, die im digitalen Backend einen Sensorhub mit FIFO für alle angeschlossenen Sensoren integrieren, wie z.B der Drehratensensor MPU3050 der Firma Invensense.

Die oben vorgestellten Lösungen des Synchronisationsproblems können unter Umständen Nachteile mit sich bringen. Der Forced mode stellt Echtzeitanforderungen an die Kontrolleinheit, die in den marktdominierenden Systemen heute nicht gegeben sind, und es ist nicht zu erwarten, dass diese zukünftig erfüllt werden. Der externe Sync Pin verursacht zusätzliche Kosten im Sensor und durch die Verdrahtung auch im System.

### Offenbarung der Erfindung

Die Druckschrift US 5 918 194 A offenbart ein Messsystem mit zwei Registern, die mit Sensoren verbunden sind.

### Vorteile der Erfindung

Die Erfindung betrifft einen Sensor zur Aufnahme von Messwerten und Ausgabe von Daten-Samples, mit wenigstens einem ersten Register in welchem eine Sensorzeit hinterlegt ist, welche Zeitinformationen über Phasenlage und/oder Periode der Daten-Samples enthält, wobei das erste Register extern, durch eine Kontrolleinheit, auslesbar ist. Der Kern der Erfindung besteht darin, dass der Sensor wenigstens ein zweites Register beinhaltet, welches extern, durch die Kontrolleinheit, beschreibbar ist, so, dass die Phasenlage und/oder die Periode der Daten-Samples in dem Sensor durch die Kontrolleinheit eingestellt wird.

Die Erfindung betrifft auch ein Sensorsystem mit wenigstens einem erfindungsgemäßen Sensor und mit einer externen Kontrolleinheit mittels der wenigstens das erste Register lesbar und wenigstens das zweite Register beschreibbar ist.

Die Erfindung betrifft auch ein sensorfusioniertes System mit wenigstens einem erfindungsgemäßen Sensorsystem mit wenigstens zwei erfindungsgemäßen Sensoren.

Die Erfindung betrifft auch ein Verfahren zur Einstellung der Phasenlage und/oder der Periode von Daten-Samples in einem erfindungsgemäßen Sensorsystem oder einem erfindungsgemäßen sensorfusionierten System.

Die Erfindung ermöglicht vorteilhaft die Synchronisation der Sensorzeit mit der Zeit der Komponente, welche die Datenfusion durchführt, typischerweise der Kontrolleinheit.

Der Sensor implementiert heute normalerweise bereits einen Sample timer, der intern verwendet wird, um zu bestimmen, wann der Sensor eine neue Messung startet.

Dieser *Sample timer* wird mit einem *Sample counter* zur Sensorzeit *Sensor time* erweitert.

Die Kontrolleinheit kann vorteilhaft die Ausgabedatenraten der Daten-Samples in Bezug auf ihre Systemuhr sehr genau messen, da SensorTime (*SampleCounter, SampleTimer*) sub-sample Genauigkeit ermöglicht. Es wird also das gebrochen-rationale Verhältnis beider Uhren ermittelt. Daraufhin wird die Ausgaberate des Sensors abgeglichen, wobei vorteilhaft ebenfalls sub-sample Genauigkeit verwendet wird, d.h. es kann ein gebrochen-rationales Verhältnis zwischen der Sensoruhr und dessen Ausgaberate durch die Register adjust und /oder offset eingestellt werden.

Vorteilhaft sind mehrer Sensoren z.B. über einen Datenbus an eine Kontrolleinheit angeschlossen und werden mit dieser synchronosiert. Vorteilhaft ist hierbei beispielsweise eine gemeinsame Abfrage der Daten möglich. Ebenso ist das Abgleiche mit einem Bustakt möglich, was die Datenübertragung erleichtert. Vorteilhaft lassen sich bei den erfindungsgemäßen Vorrichtungen mit dem erfindungsgemäßen Verfahren Datenraten von Sensoren anpassen. Vorteilhaft werden hierbei nicht die Sensordaten nachträglich synchronisiert, sondern die Generierung der Daten im Sensor selbst so geregelt, dass sie synchron erfolgt.

### Zeichnung

Fig. 1 zeigt schematisch eine synchrone Datenausgabe zweier Sensoren A und B im Stand der Technik mit einem Sample je 10 ms.
Fig. 2 zeigt eine Kontrolleinheit mit mehreren Sensoren im Stand der Technik.
Fig. 3 zeigt schematisch eine asynchrone Datenausgabe zweier Sensoren A und B im Stand der Technik.
Fig. 4 zeigt schematisch eine asynchrone Datenausgabe zweier Sensoren A und B mit FIFO Speicher im Stand der Technik.
Fig. 5 zeigt einen Sensor mit zwei extern zugänglichen Registern *SampleTimer* und *SampleCounter,* verbunden mit einer Kontrolleinheit..
Fig. 6 zeigt einen erfindungsgemäßen Sensor mit zusätzlichen Registern *adjust* und *offset,* verbunden mit einer Kontrolleinheit.
Fig. 7 zeigt schematisch den Ablauf der Kommunikation zwischen der Kontrolleinheit und eines Sensors des erfindungsgemäßen Verfahrens zur Synchronisation des Sensors.
Fig. 8 zeigt mehrere erfindungsgemäße Sensoren mit zusätzlichen Registern *adjust* und *offset,* verbunden mit einer Kontrolleinheit.

### Beschreibung von Ausführungsbeispielen

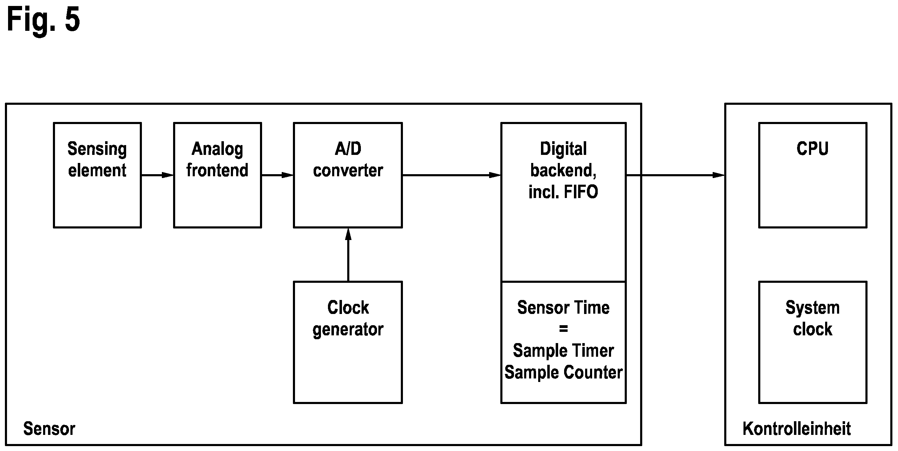

Fig. 5 zeigt einen Sensor mit zwei extern zugänglichen Registern *SampleTimer* und *SampleCounter.* Es ist im Stand der Technik bekannt Sensoren mit einem Sample Counter zu versehen, um die Zeit zwischen Daten-Samples zu messen. Dazu ist der Sample Counter im Sensor intern verfügbar. In der nicht vorveröffentlichten Patentanmeldung DE 102012207026.5 ist ein Sensor beschrieben, welcher ein Register *SampleTimer* und ein Register *SampleCounter* enthält, wie in der Fig. 5 dargestellt ist. Das Register *SampleTimer* beinhaltet die Zeitdauer innerhalb eines Samples und wird mit Beginn jedes neuen Samples zurückgesetzt. Das Register *SampleCounter* zählt die Samples. Der Inhalt dieser beiden Register bildet die Sensorzeit *SensorTime* und ist von außen, beispielsweise einer Kontrolleinheit zugänglich. Der Sensor erlaubt der Kontrolleinheit die Sensorzeit auszulesen. Die Kontrolleinheit kann daraus jedem Sample der Datenausgabe des Sensors einen genauen Zeitstempel zuordnen.

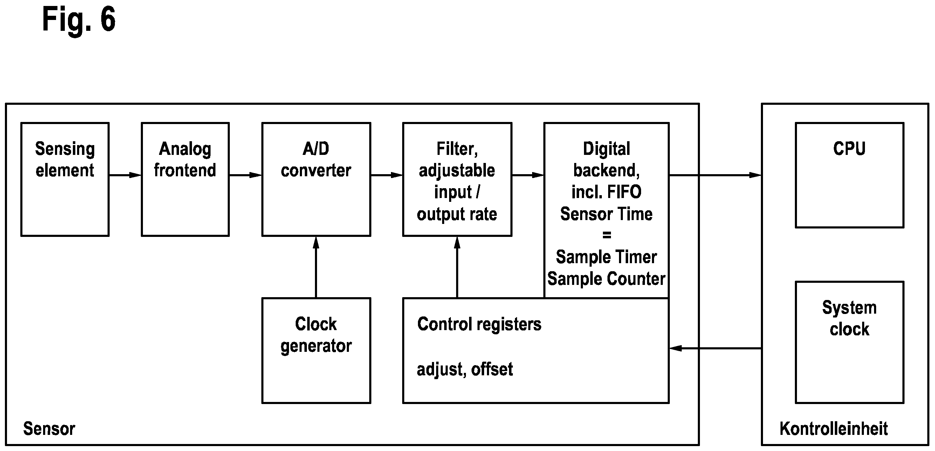

Fig. 6 zeigt einen erfindungsgemäßen Sensor mit zusätzlichen Registern *adjust* und *offset.* Der erfindungsgemäße Sensor weist ein Meßelement (Sensing element) zur Aufnahme von Meßwerten, ein analoges Eingangsteil (Analog frontend) zur analogen Verarbeitung von Meßwerten, einen Analog/Digital Wandler (A/D converter) zur Umwandlung und ein digitales Ausgangsteil (Digital backend) zur digitalen Ausgabe von Meßwerten auf. Die Meßwerte werden als Daten-Samples am Ausgang bereitgestellt und können beispielsweise in einem FIFO Speicher zwischengespeichert sein.

Der Sensor erlaubt der Komponente, welche die Datenfusion durchführt, hier der Kontrolleinheit, die Sensorzeit *SensorTime* auszulesen. Erfindungsgemäß erlaubt der Sensor der Kontrolleinheit die zusätzlichen Register *adjust* und *offset* von außen zu beschreiben und mittels dieser Kontrollregister die Datenrate und die Phase der Messung im Sensor zu steuern. Die Kontrolleinheit bestimmt somit Phasenlage und Zeitdauer der Datenaufnahme im Sensor.

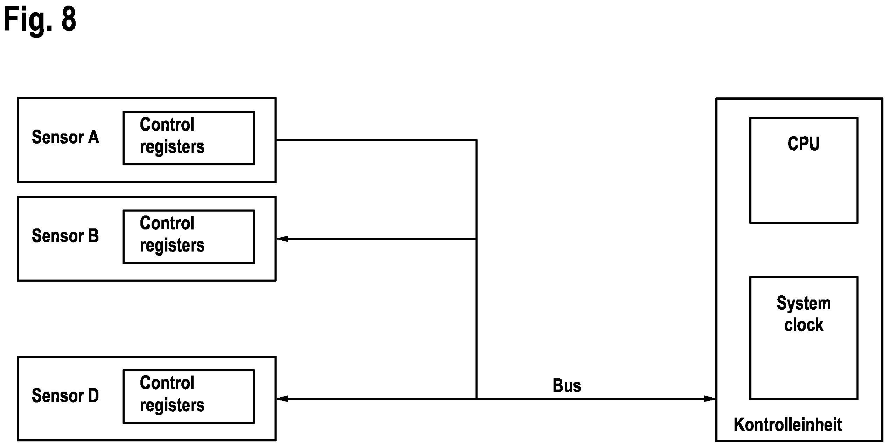

In einem sensorfusionierten System mit mehreren Sensoren ist es hierdurch möglich, daß beispielsweise alle Sensoren im System synchron ihre jeweiligen Messungen starten und ausgeben. Fig. 8 zeigt mehrere erfindungsgemäße Sensoren mit zusätzlichen Registern *adjust* und *offset,* verbunden mit einer Kontrolleinheit, die ein derartiges sensorfusioniertes System bilden können.

Durch Auslesen der Sensorzeit zu zwei verschiedenen Zeitpunkten wird der Gangunterschied zwischen der Sensoruhr und der Systemuhr der Kontrolleinheit ermittelt. Diese Verhältnis der beiden Uhren wird als Korrekturfaktor in die Register *adjust* oder auch *offset.* den Sensor geschrieben.

Die Datenverarbeitung ist dabei wie folgt
Üblicherweise zählt ein internes Register (*SampleTimer*) im ADC bzw. Dezimierfilter innerhalb des Sensors eine ganze Zahl von Clock Zyklen bis zur Ausgabe eines neuen Datenwertes.

In einem Beispiel zählt das *SampleTimer* Register von 0 bis zu einem hinterlegten Endwert 2000. Bei Erreichen der 2000 wird ein neuer Datenwert (Daten-Sample) generiert, das *SampleCounter* Register um 1 erhöht und das *SampleTimer* Register auf 0 zurück gesetzt.

In einer Ausführungsform der Erfindung weist der Sensor ein Register *adjust* auf. Erfindungsgemäß wird der Endwert durch das Register *adjust* flexibel programmierbar gestaltet. Das Register *adjust* hat anfangs den Wert 2000. Wird nun beim Messen des Gangunterschieds festgestellt, dass der Sensor 1% schneller läuft als die Kontrolleinheit, so wird der Endwert im Register *adjust* von 2000 um 20 auf 2020 erhöht, wordurch sich die Datenraten angleichen.

In einer weiteren Ausführungsform der Erfindung weist der Sensor das Register *adjust* mit einen Nachkommateil auf um die Genauigkeit weiter zu erhöhen. Die Nachkommastellen (Mantisse) des Registers *adjust* enthalten den gebrochenzahligen Werte des Teilerverhältnises des Korrekturfaktors, ähnlich dem Einfügen eines Schaltjahres im Kalender. In dem Beispiel soll der genaue Endwert nun nicht 2020 sondern 2020.25 betragen. Wenn das Register *adjust* z.B. 8-bit Nachkommastellen hat (d.h. 1/256 als Quantisierungsschritt) und den Wert 64 enhält, so wird bei den ersten 64 Samples jeweils ein zusätzlicher Takt eingefügt, bei den nächsten 192 Takten nicht mehr, so dass sich im Mittel 2020.25 Takte der Sensoruhr für einen Datenpunkt ergibt.

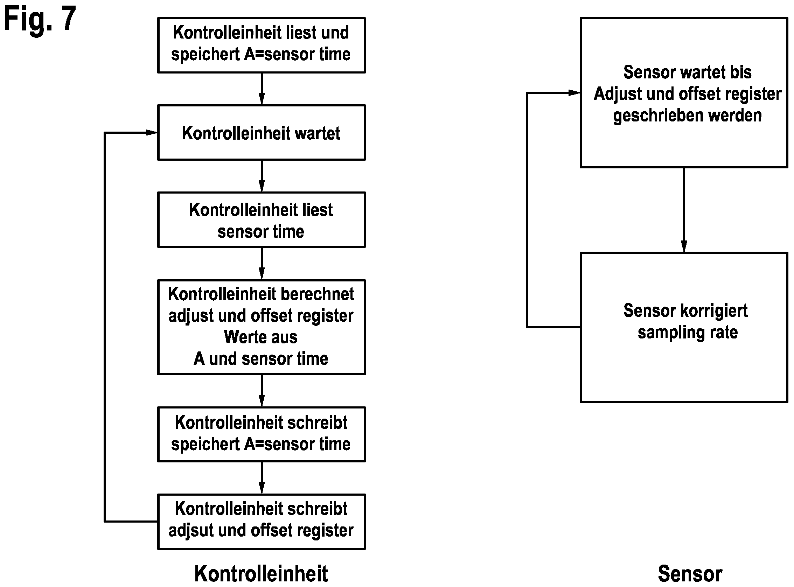

Fig. 7 zeigt schematisch den Ablauf der Kommunikation zwischen der Kontrolleinheit und eines Sensors des erfindungsgemäßen Verfahrens zur Synchronisation des Sensors.

Um Variationen während der Laufzeit auszugleichen (z.B. aufgrund von Temperaturänderungen) und numerische Rundungsfehler zu korrigieren kann bei jedem Abfragen der Sensorsdaten gleichzeitg auch das *Sample timer* Register ausgelesen werden. Diese Information kann wird benutzt um mit dem gleichen Verfahren den Endwert laufend nachzustellen. Wie bereits oben beschrieben wird eine etwaige Abweichung zwischen Sensoruhr und Systemuhr ermittelt und die Werte der Register *adjust* und/oder *offset* entsprechend abgeglichen.

Um eine Stabilität der Regelung zu errreichen wird der Gangunterschied über mehrere Messpunkte betrachtet. Vor einer erneuten Änderung der Register *adjust* und *offset* ist die Zeit zur Messung des Korrekturfaktors abzuwarten um Oszillationen in der Regelschleife zu vermeiden.

In noch einer Ausführungsform der Erfindung ein Register *offset* auf.
Wird beim Messen festgestellt, dass der Sensor bereits um einen gewissen Wert von dem gewünschten Samplezeitraster weggelaufen ist, kann dieser innerhalb von einem oder mehreren Samples zusätzlich einmalig korrigiert werden.

Der Wert im Register *offset* gibt dabei an in welcher Häufigkeit der Endwert des Zählers z.B. um 1 erhöht (oder erniedrigt) werden muss.
Nachdem die Kontrolleinheit einen Wert in das Register *offset* geschrieben hat erhöht die Sensorschaltung im Zähler von *Sensortime* den Endwert z.B. um 1 und zählt bei jedem Sample das Register *offset* um z.B. 1 herunter bis zum Erreichen der 0.

## Patentansprüche

1. Sensor zur Aufnahme von Messwerten und Ausgabe von Daten-Samples, mit wenigstens einem ersten Register in welchem eine Sensorzeit hinterlegt ist, welche Zeitinformationen über Phasenlage und/oder Periode der Daten-Samples enthält, wobei das erste Register extern, durch eine Kontrolleinheit, auslesbar ist,
**dadurch gekennzeichnet, dass**
der Sensor wenigstens ein zweites Register beinhaltet, welches extern, durch die Kontrolleinheit, beschreibbar ist, so, dass die Phasenlage und/oder die Periode der Daten-Samples in dem Sensor durch die Kontrolleinheit eingestellt wird.

2. Sensor nach Anspruch 1, **dadurch gekennzeichnet, dass** der Sensor
- wenigstens ein zweites Register *adjust* beinhaltet, durch welches die Periode von Daten-Samples in dem Sensor einstellbar ist und/oder
- wenigstens ein zweites Register *offset* beinhaltet, durch welches die Phasenlage von Daten-Samples in dem Sensor einstellbar ist.

3. Sensorsystem mit wenigstens einem Sensor nach Anspruch 1 oder 2 und mit einer externen Kontrolleinheit mittels der wenigstens das erste Register lesbar und wenigstens das zweite Register beschreibbar ist.

4. Sensorfusioniertes System mit wenigstens einem Sensorsystem nach Anspruch 3 mit wenigstens zwei Sensoren nach Anspruch 1 oder 2.

5. Verfahren zur Einstellung der Phasenlage und/oder der Periode von Daten-Samples in einem Sensorsystem nach Anspruch 3 oder einem sensorfusionierten System nach Anspruch 4, **gekennzeichnet durch** die Schritte.
a) Auslesen des ersten Registers Sensorzeit aus dem Sensor durch die externe Kontrolleinheit
b) Vergleichen der Sensorzeit mit einer Referenzzeit der externen Kontrolleinheit
c) Berechnen von Korrekturwerten in der externen Kontrolleinheit
d) Schreiben der Korrekturwerte in das zweite Register in dem Sensor durch die externe Kontrolleinheit und dadurch Einstellen der Phasenlage und/oder der Periode zukünftiger Daten-Samples im Sensor.

6. Verfahren nach Anspruch 5, **dadurch gekennzeichnet, daß** das Einstellen der Phasenlage und/oder der Periode zukünftiger Daten-Samples im Sensor derart erfolgt, dass Phasenlage und/oder der Periode der Daten-Samples eines oder mehrere Sensoren an einen Referenztakt oder die Referenzzeit der Kontrolleinheit angepasst werden.

7. Verfahren nach Anspruch 5 oder 6, **dadurch gekennzeichnet, dass** ein weiterer Sensor als externe Kontrolleinheit betrieben wird.

8. Verfahren nach einem der vorhergehenden Ansprüche 5 bis 7, **dadurch gekennzeichnet, dass** die Gesamtheit der Verfahrensschritte a) bis d) mehrfach hintereinander durchgeführt wird.

## Claims

1. Sensor for recording measured values and outputting data samples, having at least one first register storing a sensor time containing time information about the phase and/or period of the data samples, wherein the first register is readable externally by a control unit,
**characterized in that**
the sensor contains at least one second register that is writable externally by the control unit such that the phase and/or the period of the data samples in the sensor is adjusted by the control unit.

2. Sensor according to Claim 1, **characterized in that** the sensor
- contains at least one second register *adjust,* by means of which the period of data samples in the sensor is adjustable, and/or
- contains at least one second register *offset,* by means of which the phase of data samples in the sensor is adjustable.

3. Sensor system having at least one sensor according to Claim 1 or 2, and having an external control unit by means of which at least the first register is readable and at least the second register is writable.

4. Sensor-fused system having at least one sensor system according to Claim 3 having at least two sensors according to Claim 1 or 2.

5. Method for adjusting the phase and/or the period of data samples in a sensor system according to Claim 3 or a sensor-fused system according to Claim 4, **characterized by** the steps of
a) reading the first register sensor time from the sensor by means of the external control unit
b) comparing the sensor time with a reference time of the external control unit
c) calculating correction values in the external control unit
d) writing the correction values to the second register in the sensor by means of the external control unit and thereby adjusting the phase and/or the period of future data samples in the sensor.

6. Method according to Claim 5, **characterized in that** the phase and/or the period of future data samples in the sensor is/are adjusted such that the phase and/or the period of the data samples of one or more sensors are adapted to a reference clock or the reference time of the control unit.

7. Method according to Claim 5 or 6, **characterized in that** a further sensor is operated as an external control unit.

8. Method according to one of the preceding Claims 5 to 7, **characterized in that** all of method steps a) to d) are performed repeatedly in succession.

## Revendications

1. Capteur destiné à acquérir des valeurs mesurées et à délivrer des échantillons de données, comprenant au moins un premier registre dans lequel est stocké un temps de capteur, lequel contient des informations de temps à propos de la position de phase et/ou de la période des échantillons de données, le premier registre pouvant être lu depuis l'extérieur par une unité de contrôle,
**caractérisé en ce que**
le capteur contient au moins un deuxième registre, lequel peut être écrit depuis l'extérieur par l'unité de contrôle, de sorte que la position de phase et/ou la période des échantillons de données dans le capteur soit réglée par l'unité de contrôle.

2. Capteur selon la revendication 1, **caractérisé en ce que** le capteur
- contient au moins un deuxième registre *adjust,* par le biais duquel peut être réglée la période des échantillons de données dans le capteur et/ou
- contient au moins un deuxième registre *offset,* par le biais duquel peut être réglée la position de phase des échantillons de données dans le capteur.

3. Système de capteur comprenant au moins un capteur selon la revendication 1 ou 2 et comprenant une unité de contrôle externe au moyen de laquelle au moins le premier registre peut être lu et au moins le deuxième registre peut être écrit.

4. Système fusionné de capteurs comprenant au moins un système de capteur selon la revendication 3 comprenant au moins deux capteurs selon la revendication 1 ou 2.

5. Procédé de réglage de la position de phase et/ou de la période d'échantillons de données dans un système de capteur selon la revendication 3 ou dans un système fusionné de capteurs selon la revendication 4,
**caractérisé par** les étapes suivantes :
a) lecture du premier registre le temps de capteur depuis le capteur par l'unité de contrôle externe
b) comparaison du temps de capteur avec un temps de référence de l'unité de contrôle externe,
c) calcul de valeurs de correction dans l'unité de contrôle externe,
d) écriture des valeurs de correction dans le deuxième registre dans le capteur par l'unité de contrôle externe et ainsi réglage de la position de phase et/ou de la période des futurs échantillons de données dans le capteur.

6. Procédé selon la revendication 5, **caractérisé en ce que** le réglage de la position de phase et/ou de la période des futurs échantillons de données dans le capteur est effectué de telle sorte que la position de phase et/ou la période des échantillons de données d'un ou plusieurs capteurs sont adaptées à une horloge de référence ou au temps de référence de l'unité de contrôle.

7. Procédé selon la revendication 5 ou 6,
**caractérisé en ce qu'**un capteur supplémentaire fonctionne en tant qu'unité de contrôle externe.

8. Procédé selon l'une des revendications 5 à 7,
**caractérisé en ce que** l'ensemble des étapes a) à d) est exécuté plusieurs fois l'un après l'autre.
